Europäisches Patentamt

European Patent Office

Office européen des brevets

(19)

(11) Veröffentlichungsnummer : **0 029 955**
**B1**

(12)

# EUROPÄISCHE PATENTSCHRIFT

(45) Veröffentlichungstag der Patentschrift :
**03.11.82**

(51) Int. Cl.³ : **G 02 B 21/06**

(21) Anmeldenummer : **80107174.7**

(22) Anmeldetag : **19.11.80**

(54) **Automatische Durchlichtbeleuchtung für Mikroskope.**

(30) Priorität : **21.11.79 DE 2946927**

(43) Veröffentlichungstag der Anmeldung :
**10.06.81 (Patentblatt 81/23)**

(45) Bekanntmachung des Hinweises auf die Patenterteilung : **03.11.82 Patentblatt 82/44**

(84) Benannte Vertragsstaaten :
**AT CH GB LI**

(56) Entgegenhaltungen :
**AT B 167 069**
**DE A 1 807 786**
**DE A 2 116 625**
**DE A 2 219 521**
**DE A 2 644 341**
**DE A 2 846 655**
**US A 3 679 287**

(73) Patentinhaber : **Firma Carl Zeiss**
**Postfach 1369/1380**
**D-7082 Oberkochen (DE)**

(72) Erfinder : **Weber, Klaus, Dr.**
**Baumgartenweg 22**
**D-7923 Königsbronn (DE)**

Imprimerie Jouve, 18, rue St-Denis, 75001 Paris, France

Automatische Durchlichtbeleuchtung für Mikroskope

Die Erfindung betrifft eine Vorrichtung zur automatischen Steuerung der Betriebsparameter eines Durchlichtbeleuchtungssystems für Mikroskope.

Zur Herstellung optimaler Beleuchtungsbedingungen, wie es für das Mikroskopieren mit höchstmöglichem Kontrast und Auflösungsvermögen nötig ist, muß nach dem Köhler'schen Prinzip das Objekt mit einer auf das zur Beobachtung verwendete Objektiv abgestimmten Leuchtfeldgröße und Apertur ausgeleuchtet werden. Die zur Einhaltung dieses Prinzips nötigen Einstellarbeiten erfordern bei jedem Objektivwechsel zusätzliche Handgriffe.

Es ist daher bereits seit längerer Zeit versucht worden, bei einem Objektivwechsel automatisch mitschaltende Beleuchtungseinrichtungen zu schaffen, die aber alle recht aufwendig und teuer sind und sich daher in einem preiswerten Routinemikroskop, dessen Benutzerkreis in besonderem Maße von dieser Arbeitserleichterung profitieren würde, nicht realisieren lassen.

Aus der DE-AS 1 807 786 ist bekannt, die Beleuchtungseinstellung durch Verwendung eines Kondensorrevolvers zu vereinfachen, und in der US-PS 3 679 287 wird eine bewegungsmäßige Kopplung zwischen einem Kondensorrevolver und dem Objektivrevolver vorgeschlagen.

Kondensoren bestehen jedoch aus mehreren präzise herzustellenden und zu zentrierenden Linsengliedern. Da sie außerdem in unmittelbarer Objektnähe unter dem Tisch des Mikroskopes angeordnet sing, benötigt ein Kondensorrevolver eine aufwendige Mechanik, mit der der Kondensor beim Wechsel abgesenkt wird, oder muß der tisch für das Wegschwenken des Kondensors ausgebrochen werden. Wenn der Tisch als Kreuztisch ausgebildet ist, ergeben sich im letzteren Falle unerwünschte, einschränkende Nebenbedingungen für dessen Führungsbahnen.

Es ist auch bekannt, in das Beleuchtungssystem Hilfslinsen einzuschwenken (DE-OS 2 116 625) und das Ein- oder Ausschwenken der Hilfslinsen durch einen elektrischen Antrieb vorzunehmen, der über einen eine Kennung an den Objektiven abtastenden Signalgeber gesteuert wird (DE-OS 2 846 655). Eine andere Vorrichtung benutzt beim Drehen des Objektivrevolvers betätigte Schalter, um ein im Beleuchtungsstrahlengang angeordnetes Linsenglied parallel zur optischen Achse mit Hilfe eines Elektromotors zu verschieben (DE-AS 2 219 521).

Derartige Übertragungssysteme zwischen Objektivrevolver und Beleuchtungssystem sind nicht nur wegen der Verwendung elektrischer Antriebe aufwendig und teuer. Die nötige genaue Positionierung einer größeren Anzahl von Linsengliedern zur Änderung der Brennweite des Beleuchtungssystems erfordert präzise hergestellte Führungen und einen hohen Justieraufwand bei der Fertigung.

Die DE-OS 2 644 341 beschreibt eine Vorrichtung zur automatischen Einstellung eines Beleuchtungssystems, die durch Lichtmengenmessung in der Bildebene gesteuerte Motoren zur kontinuierlichen Regelung zweier als Apertur- und Sehfeldblenden arbeitenden Irisblenden benutzt. Auch diese Vorrichtung ist wegen der Verwendung mindestens zweier Motoren mit den dazugehörigen Getrieben, der Steuerelektronik, Stromversorgung etc. aufwendig und teuer. Außerdem kann nicht ausgeschlossen werden, daß die Eigenschaften der zu untersuchenden Proben die Funktion der Anordnung unerwünscht beeinflussen.

In der AT-PS 167 069 ist eine automatische Beleuchtung sowohl für Durchlicht als auch für Auflicht beschrieben, in der ein im Beleuchtungsstrahlengang angeordneter Blendenrevolver über eine Welle mit dem Objektivrevolver verbunden und dadurch mit diesem mechanisch bewegungsmäßig gekoppelt ist. Die Aperturblenden werden bei dieser bekannten Beleuchtungseinrichtung allerdings von der Lichtquelle her gesehen vor den Leuchtfeldblenden in eine zur hinteren Brennebene des Kondensors konjugierte Ebene eingeschwenkt und durch in den Leuchtfeldblenden gefaßte Linsen zwischenabgebildet. Der bekannten Einrichtung haftet zum Einen der Nachteil an, daß die starre Kopplung zwischen Objektivrevolver und Blendenrevolver eine Höhenverstellung des Objektivrevolvers zum Zwecke der Fokussierung ausschließt. Zum Anderen ist das Einstellen sehr großer Leuchtfelder, wie sie bei geringer Vergrößerung (Lupenvergrößerung) benötigt werden, nicht möglich, da zwischen Leuchtfeldblende und Objektfeld in allen Revolverstellungen konstante Abbildungsverhältnisse bestehen.

Es ist die Aufgabe der vorliegenden Erfindung, eine Vorrichtung zur automatischen Steuerung der Betriebsparameter eines Durchlichtbeleuchtungssystems zu schaffen, die sich unter Vermeidung von funktionsmäßigen Einschränkungen durch einen einfachen und kostengünstigen Aufbau auszeichnet.

Ausgehend von einer Beleuchtungseinrichtung nach dem Oberbegriff wird diese Aufgabe gemäß dem kennzeichnenden Teil des Hauptanspruches dadurch gelöst, daß ein Aperturblendenrevolver und ein Leuchtfeldblendenrevolver bewegungsmäßig mit dem Objektivrevolver gekoppelt sind und daß der die Aperturblenden tragende Revolver in Lichtrichtung hinter dem die Leuchtfeldblenden tragenden Blendenrevolver in unmittelbarer Nähe der hinteren Brennebene des Kondensors angeordnet ist und in mindestens einer Schaltstellung eine Hilfslinse trägt.

Die erfindungsgemäße Lösung besitzt gegenüber der bekannten Beleuchtungseinrichtung mit mechanischer Kopplung von Blenden- und Objektivrevolver den Vorteil, daß auch sehr große Objektfelder ausgeleuchtet werden können. Mit der auf dem Aperturblendenrevolver angeordneten Hilfslinse kann nämlich der Maßstab unter dem die Leuchtfeldblende in die Objektebene abgebildet wird, verändert und damit der Bündelquerschnitt des Beleuchtungsstrahlenganges stets hinreichend klein gehalten werden.

Es ist vorteilhaft, den Apertur- und den Leuchtfeldblendenrevolver als drehbare Scheiben auszubilden und auf einer gemeinsamen Antriebswelle anzuordnen, um einen besonders einfachen Aufbau des Systems zu erreichen. Die erforderliche Drehbewegung beim Blendenwechsel kann ohne Schwierigkeiten von der Drehbewegung des Objektivrevolvers abgeleitet werden.

Zweckmäßig werden die Blenden auswechselbar in die Revolver eingelegt, um ohne großen Aufwand das Beleuchtungssystem auf die vom Benutzer gewünschte Objektivkombination anzupassen, bzw. um diesem die Möglichkeit zu geben, bei einer Änderung der Bestückung des Objektivrevolvers selbst das Beleuchtungssystem anpassen zu können.

Um ein Fokussieren bei feststehendem Objekttisch durch Höhenverstellung des Objektivrevolvers zu ermöglichen, schließen die mechanischen Übertragungsmittel zwischen Objektiv- und Blendenrevolver vorteilhaft eine in Richtung der optischen Achse verschiebbar gelagerte Welle ein, die den Fokussierhub des beweglichen Objektivrevolvers gegenüber dem feststehenden Blendenrevolver ausgleicht.

Weiterhin ist es zweckmäßig, in der Aperturebene eine zusätzliche, unabhängig von der Revolverstellung kontinujerlich einstellbare Irisblende anzuordnen. Damit ist es möglich, die Beleuchtung zur Kontrasterhöhung ausgehend von dem durch den Revolver eingestellten Wert zu verringern.

Wenn die Beleuchtungseinrichtung mit einfachen Mitteln für die gängigen Kontrastierungsverfahren wie Dunkelfeldbeleuchtung, Phasenkontrast, Interferenzkontrast tauglich gemacht werden soll, empfiehlt es sich, in unmittelbarer Nähe der Aperturblende einen zusätzlichen, unabhängig vom Aperturblendenrevolver betätigbaren Revolver anzuordnen, der die für die durchzuführenden Verfahren nötigen Zentralblenden, Ringblenden bzw. einen Polarisator enthält. Zur Angleichung der Bildhelligkeit im Hellfeldbetrieb ist es zweckmäßig, ein Graufilter in der betreffenden Schaltstellung vorzusehen. Diese Blenden können ebenfalls auswechselbar jeweils in einen zentrierbaren Rahmen im Zusatzrevolver eingelegt sein, um der Ringgröße in den entsprechenden Objektiven angepaßte Blenden verwenden zu können bzw. die Ringblenden gegenüber den Phasenringen in den Objektiven justieren zu können. Der Zusatzrevolver kann beispielsweise die Form eines Schiebers besitzen, auf dem die Blendenträger und die dazugehörenden Zentrierschrauben angeordnet sind.

Um jederzeit kontrollieren zu können, ob der Kondensor richtig fokussiert ist, ist ein in der Ebene der Leuchtfeldblende in den Strahlengang einschwenkbares Hilfsobjekt zweckmäßig, denn wegen der Automatik des Beleuchtungssystems liegt der Rand der Leuchtfeldblende immer außerhalb des Sehfelds. Dieser Arbeitsgang gehört jedoch zu den sekundären Handgriffen, der nur dann erforderlich ist, wenn mit Objektträgern gearbeitet wird, die sehr starken Dickeschwankungen unterliegen.

Anhand der beigefügten Zeichnungen, die eine Ausführungsform eines Beleuchtungssystems nach der vorliegenden Erfindung skizzieren, wird diese beispielsweise erläutert :

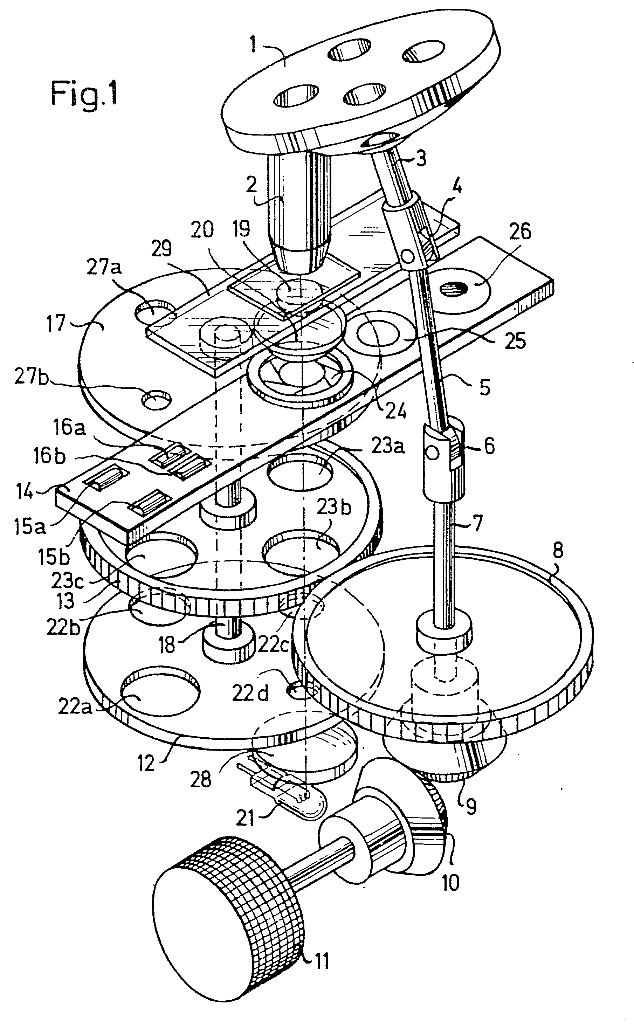

In Figur 1 ist der Gesamtaufbau einer Durchlichtbeleuchtung nach der vorliegenden Erfindung vereinfacht dargestellt ;

Figur 2 stellt eine detaillierte Skizze des Aperturblendenrevolvers aus Fig. 1 dar ;

Figur 3 skizziert den in Fig. 1 dargestellten Leuchtfeldblendenrevolver mit einer zusätzlichen Fokussierhilfe für den Kondensor.

Ein mit der Welle 3 verbundener Revolver 1 ist zur Aufnahme von vier Objektiven bestimmt, von denen ein Objektiv 2 dargestellt ist. Der Objektivrevolver 1 wird vom Benutzer durch einen Betätigungsknopf 11 über ein Winkelgetriebe 9, 10 und mit Gelenkgliedern 4, 6 verbundenen Wellen 5 und 7 in vier mögliche Raststellungen geschaltet. Durch ein Stirnradgetriebe 8, 13 wird gleichzeitig mit dem Objektivrevolver 1 über eine parallel zur optischen Achse angeordnete, gemeinsame Welle 18 der Leuchtfeldblendenrevolver 12 und der Aperturblendenrevolver 17 geschaltet.

Der Leuchtfeldblendenrevolver 12 trägt vier verschiedene Leuchtfeldblenden 22a, b, c, und d, die mit vier entsprechenden Aperturblenden 27 im Revolver 17, von denen zwei (27a und b) dargestellt sind, nach dem Köhler'schen Beleuchtungsprinzip auf die am Revolver 1 zu befestigenden Objektive abgestimmt sind. Um den Beleuchtungsstrahlengang nicht zu beschränken besitzt das Stirnrad 13 vier genügend groß dimensionierte Öffnungen 23a-d.

Das Beleuchtungssystem enthält eine Lampe 21 zur Beleuchtung des Objektträgers 29 mit Hilfe des Kollektors 28 und des zweiteiligen Kondensors 19, 20. In unmittelbarer Nähe der Aperturblende befindet sich ein als Schieber ausgebildeter Zusatzrevolver 14, der jeweils eine Zentralblende 26 für Dunkelfeldbeleuchtung, eine Ringblende 25 für Phasenkontrast und in der gezeigten Schaltstellung ein nicht dargestelltes Graufilter zur Helligkeitsminderung bei Hellfeldbeleuchtung trägt. Im dargestellten, eingeschobenen Zustand sind die Justierschrauben 15a und 15b zur Zentrierung der Ringblende 25 und Justierschrauben 16a und b zur Justierung der Zentralblende 26 verdeckt und können vom Benutzer nicht unbeabsichtigt verstellt werden. Wird z.B. statt der Ringblende 25 ein Polarisator eingesetzt, dann können die Justierschrauben 15a und b zum Abgleich der Kreuzungstellung gegenüber einem feststehenden Analysator verwendet werden, wenn die Befestigung des justierbaren Aufnahmerahmens für den Polarisator bzw. die Blende 25 so ausgelegt ist, daß eine Verschiebung des Rahmens in der Ebene des Zusatzrevolvers 14 mit Hilfe der Schrauben 15a und b von einer gleichzeitigen Verdrehung begleitet ist.

Direkt über dem Schieber 14, ebenfalls noch in unmittelbarer Nähe der Aperturebene befindet sich eine über nicht dargestellte Betätigungsmittel einstellbare Irisblende 24, die als Kontrastierungshilfe im Hellfeldbetrieb benutzt werden kann.

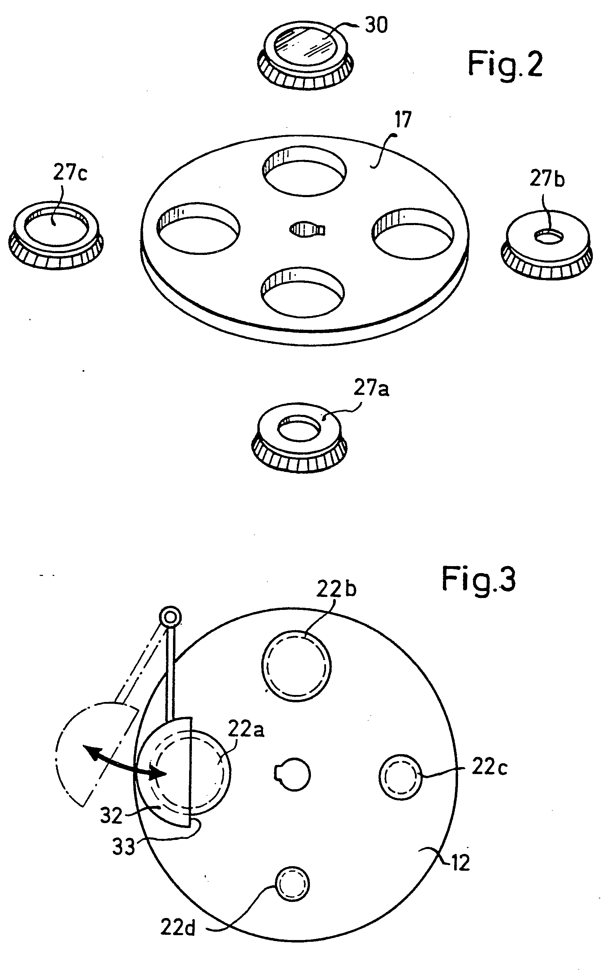

Der Aperturblendenrevolver 17 ist in Fig. 2 nochmals detaillierter dargestellt : Er besteht aus einer Scheibe, die vier in gleichem Abstand zu ihrem Mittelpunkt angeordnete Bohrungen gleichen Durchmessers besitzt. Diese dienen zur Aufnahme von jeweils 3 Blendeneinsätzen 27a, b und c sowie der Hilfslinse 30, mit der sich die Brennweite des Kondensors ändern läßt. Die Blendeneinsätze 27a, b und c sowie die Fassung der Hilfslinse 30 bestehen jeweils aus Ringen, deren Außendurchmesser größer als der Innendurchmesser der Bohrungen im Blendenrevolver 17 ist, und die einen federnden Ansatz besitzen, der nach dem Eindrücken der Blendeneinsätze diese im Reibschluß in den Bohrungen hält.

Anhand von Fig. 3 sei nochmals das Überprüfen der exakten Fokussierung des Kondensors erläutert :

Im normalen Betriebszustand sind die Ränder der Leuchtfeldblenden 22a-d nicht sichtbar, da die Kopplung zwischen dem Objektivrevolver und dem Leuchtfeldblendenrevolver 12 bei korrekter Bestückung stets dafür sorgt, daß die jeweiligen Sehfelder, durch gestrichelte Kreise angedeutet, innerhalb der Leuchtfelder liegen. Als Kriterium für die exakte Fokussierung des Kondensors dient jedoch der Kontrast der Leuchtfeldblendenbegrenzung. Diese wird nun durch ein vom Benutzer mittels eines nicht dargestellten Hebels in unmittelbarer Nähe der Leuchtfeldblende einschwenkbares Hilfsobjekt 32 verkleinert, d.h. die Kante 33 des Hilfsobjekts 32 wird nach dem Einschwenken für den Benutzer sichtbar. Der Kondensor kann nun mittels nicht dargestellter Einstellmittel durch Scharfstellen der Begrenzung 33 exakt fokussiert werden.

Mit der dargestellten Beleuchtungseinrichtung sind ohne größeren Aufwand alle primär bei einem Objektivwechsel anfallenden Beleuchtungseinstellungen automatisiert. Für die im Revolver 1 angebrachten Objektive stellt sich automatisch beim Einschwenken in den Abbildungsstrahlengang der richtige Leuchtfelddurchmesser — er ist ca. 25 % größer als der jeweilige Sehfelddurchmesser — und die korrekte Beleuchtungsapertur — sie liegt bei zwischen 75 % und 95 % der Objektivapertur — ein, wenn die Bestückung der Revolver aufeinander abgestimmt ist. Unabhängig davon besitzt der Benutzer die Freiheit, Kontrastierungsmethoden nach seiner Wahl einzusetzen. Mit einer derartigen Beleuchtungseinrichtung kann ein preisgünstiges und bedienungsfreundliches Routine-Mikroskop geschaffen werden, für das ein Langgehegter Bedarf in breiten Benutzerkreisen besteht.

## Ansprüche

1. Durchlichtbeleuchtung für Mikroskope, in denen bei feststehendem Kondensor ein Objektivrevolver mit im Beleuchtungsstrahlengang angeordneten Blenden durch mechanische Übertragungsmittel bewegungsmäßig gekoppelt ist, dadurch gekennzeichnet, daß ein Aperturblendenrevolver (17) und ein Leuchtfeldblendenrevolver (12) bewegungsmäßig mit dem Objektivrevolver (1) gekoppelt sind und daß der die Aperturblenden (27a,b,c) tragende Revolver (17) in Lichtrichtung hinter dem die Leuchtfeldblenden (22a,b,c) tragenden Blendenrevolver (12) in unmittelbarer Nähe der hinteren Brennebene des Kondensors (19, 20) angeordnet ist und in mindestens einer Schaltstellung eine Hilfslinse (30) trägt.

2. Durchlichtbeleuchtung nach Anspruch 1, dadurch gekennzeichnet, daß der Aperturblendenrevolver (17) und der Leuchtfeldblendenrevolver (12) als drehbare Scheiben auf einer gemeinsamen Antriebswelle (18) angebracht sind.

3. Durchlichtbeleuchtung nach Anspruch 1-2, dadurch gekennzeichnet, daß die Apertur- und Leuchtfeldblenden austauschbar im jeweiligen Revolver befestigt sind.

4. Durchlichtbeleuchtung nach Anspruch 1-3, dadurch gekennzeichnet, daß die mechanischen Übertragungsmittel eine in Richtung der optischen Achse verschiebbar gelagerte Welle (7) einschließen.

5. Durchlichtbeleuchtung nach Anspruch 1-4, gekennzeichnet durch eine in der hinteren Brennebene des Kondensors (19, 20) angeordnete, kontinuierlich veränderbare Irisblende (24).

6. Durchlichtbeleuchtung nach Anspruch 1-5, gekennzeichnet durch einen in unmittelbarer Nähe der hinteren Brennebene des Kondensors angeordneten, unabhängig vom Aperturblendenrevolver (17) betätigbaren, zusätzlichen Revolver (14), der Ringblenden (25) oder einen Polarisator, Zentralblenden (26) und Graufilter enthält.

7. Durchlichtbeleuchtung nach Anspruch 6, dadurch gekennzeichnet, daß die Blenden (25, 26) bzw. Filter in den zusätzlichen Revolver (14) auswechselbar in einen zentrierbaren Rahmen eingelegt sind.

8. Durchlichtbeleuchtung nach Anspruch 1-7, gekennzeichnet durch ein in der Ebene der Leuchtfeldblenden (22a, b, c, d) in den Strahlengang einschwenkbares, die Leuchtfeldblenden teilweise abdeckendes Hilfsobjekt (32).

## Claims

1. Substage illumination for microscopes in which, with stationary condensor, a nosepiece is coupled by mechanical transmission means with stops arranged in the illuminating ray path, characterized by the fact that a turret (17) containing the aperture stops (27a, b, c) and a turret (12) containing the field stops (22a, b, c) are coupted for motion with the nosepiece (1), and that the turret (17) containing the aperture stops is arranged behind the turret (12) containing the field stops, following the common travelling direction of light, in direct vicinity of the rear focal plane of the condensor (19, 20) and bears an auxiliary lens (30) in at least one switching position.

2. Substage illumination according to claim 1, characterized by the fact that the aperture stop turret (17) and the field stop turret (12) are arranged as turnable disks on a common drive shaft (18).

3. Substage illumination according to claim 1 to 2, characterized by the fact that the aperture and field stops are fastened in replaceable manner in the corresponding turret.

4. Substage illumination according to claims 1 to 3, characterized by the fact that the mechanical transmission means include a shaft (7) which is supported for displacement in the direction of the optical axis.

5. Substage illumination according to claims 1 to 4, characterized by a continuously variable iris diaphragm (24) which is arranged in the rear focal plane of the condensor (19, 20).

6. Substage illumination according to claims 1 to 5, characterized by an additional turret (14) which is arranged in the immediate vicinity of the rear focal plane of the condensor, can be actuated independently of the aperture-stop turret (17) and contains annular diaphragms (25) or a polarizer, central diaphragms (26) and gray filters.

7. Substage illumination according to claim 6, characterized by the fact that the diaphragms (25, 26) or filters are inserted in replaceable manner in a centerable frame in the additional turret (14).

8. Substage illumination according to claims 1 to 7, characterized by an auxiliary object (31) which is swingable into the ray path in the plane of the field stops (22a, b, c) and partially covers the field stops.

**Revendications**

1. Système d'éclairage par transparence pour microscopes, dans lequel, le condenseur étant fixe, une tourelle porte-objectifs est couplée au plan cinématique, par une transmission mécanique, à des diaphragmes disposés dans le faisceau d'éclairage, caractérisé par le fait qu'une tourelle porte-diaphragmes d'ouverture (17) et une tourelle porte-diaphragmes de champ lumineux (12) sont couplées au plan cinématique à la tourelle porte-objectifs (1) et que la tourelle (17) portant les diaphragmes d'ouverture (27a, b, c) est disposée, en prenant pour sens de référence celui du flux lumineux, après la tourelle (12) portant les diaphragmes de champ lumineux (22a, b, c), au voisinage immédiat du plan focal postérieur du condenseur (19, 20), cette tourelle porte-diaphragmes d'ouverture supportant, au moins dans l'une de ses positions de commutation, une lentille intermédiaire (30).

2. Système d'éclairage par transparence selon la revendication 1, caractérisé par le fait que la tourelle porte-diaphragmes d'ouverture (17) et la tourelle porte-diaphragmes de champ lumineux (12) sont en tant que disques pivotants montées sur un arbre d'entraînement commun (18).

3. Système d'éclairage par transparence selon l'une quelconque des revendications 1 ou 2, caractérisé par le fait que les diaphragmes d'ouverture et les diaphragmes de champ lumineux sont fixés sur leur tourelle respective avec possibilité d'être échangés.

4. Système d'éclairage par transparence selon l'une quelconque des revendications de 1 à 3, caractérisé par le fait que la transmission mécanique inclut un axe (7) monté avec possibilité de translation sur la direction de l'axe optique.

5. Système d'éclairage par transparence selon l'une quelconque des revendications de 1 à 4, caractérisé par un diaphragme à iris (24) disposé dans le plan focal postérieur du condenseur (19, 20) et réglable à volonté.

6. Système d'éclairage par transparence selon l'une quelconque des revendications de 1 à 5, caractérisé par une tourelle supplémentaire (14) disposée à proximité immédiate du plan focal postérieur du condenseur et manœuvrable indépendamment de la tourelle porte-diaphragmes d'ouverture (17), cette tourelle supplémentaire comportant des diaphragmes annulaires (25) ou un polarisateur, des diaphragmes centraux (26) et des filtres gris.

7. Système d'éclairage par transparence selon la revendication 6, caractérisé par le fait que les diaphragmes ou filtres (25, 26) sont mis en place dans la tourelle supplémentaire (14) montés de façon amovible dans un cadre pouvant être centré.

8. Système d'éclairage par transparence selon l'une quelconque des revendications de 1 à 7, caractérisé par un organe auxiliaire (31) pouvant par pivotement dans le plan des diaphragmes de champ lumineux (22a, b, c, d) se positionner dans le faisceau lumineux et recouvrir partiellement ces diaphragmes.

Fig.1

Fig.2

Fig.3